# EUROPÄISCHE PATENTSCHRIFT

(11) **EP 2 816 870 B1**
(45) Veröffentlichungstag und Bekanntmachung des Hinweises auf die Patenterteilung: **09.08.2017**
(21) Anmeldenummer: 14172716.4
(22) Anmeldetag: 17.06.2014
(51) Int. Cl.: H05B 6/10, F24H 1/10, H05B 6/36, B60H 1/22, F24H 3/04, F24H 9/00

(54) **Heizvorrichtung**
Heating device
Dispositif de chauffage

(30) Priorität: 19.06.2013 DE 102013211581
(43) Veröffentlichungstag der Anmeldung: 24.12.2014
(73) Patentinhaber: MAHLE Behr GmbH & Co. KG, 70469 Stuttgart (DE); Behr-Hella Thermocontrol GmbH, 59557 Lippstadt (DE)
(72) Erfinder: Seewald, Wolfgang, 71732 Tamm (DE); Krumbach, Karl-Gerd, 71576 Burgstetten (DE); Kohl, Michael, 74321 Bietigheim-Bissingen (DE); Stallein, Matthias Dr.-Ing., 33397 Rietberg (DE); Heeper, Lars, 33102 Paderborn (DE); Marquas, Karsten, 59757 Arnsberg (Voßwinkel) (DE)
(74) Vertreter: Grauel, Andreas

(56) Entgegenhaltungen:
- EP-A2- 1 280 382
- WO-A1-2009/050631
- WO-A1-2009/130761
- GB-A- 755 570
- GB-A- 787 125
- US-A1- 2008 011 336

## Beschreibung

### Technisches Gebiet

Die Erfindung betrifft eine Heizvorrichtung mit einem Gehäuse mit einem darin angeordneten Fluidkanal mit einem Fluideinlass und einem Fluidauslass, wobei in dem Gehäuse eine ein magnetisches Wechselfeld erzeugende Spule vorgesehen ist, welche durch ein Spulengehäuse von dem Fluidkanal abgedichtet abgeteilt ist, wobei weiterhin zumindest ein metallisches Flächenheizelement vorgesehen ist, welches durch das magnetische Wechselfeld aufheizbar ist, wobei das zumindest eine Flächenheizelement im Fluidkanal angeordnet ist.

### Stand der Technik

Zur Aufheizung von Fahrzeugen, insbesondere in Fahrzeugen mit verbrauchsarmen Verbrennungsmotoren oder in Hybrid-Fahrzeugen, werden zunehmend zusätzliche Heizvorrichtungen benötigt, die eine Aufheizung des Innenraumes unabhängig von der vom Verbrennungsmotor gelieferten Heizleistung oder zusätzlich zu dieser bereitstellen.

Als besonders praktisch haben sich hierbei elektrisch betriebene Heizvorrichtungen erwiesen. Diese stellen die benötigte Wärme schnell bereit und können besonders platzsparend dimensioniert werden. Insbesondere zum Einsatz in Hybrid-Fahrzeugen eignen sich sogenannte Hochvolt-Heizvorrichtungen, die mit einer Spannung von bis über 300 Volt betrieben werden können.

Heizvorrichtungen sind im Stand der Technik bekannt. So gibt es luftseitige Heizvorrichtungen, die sogenannte PTC-Heizelemente aufweisen, die elektrisch bestromt werden und sich dadurch erwärmen. Über luftseitige Lamellen, die mit den PTC-Elementen in Kontakt sind, wird die Wärme auf die durchströmende Luft übertragen. Diese Heizvorrichtungen weisen jedoch einen grundsätzlich anderen Aufbau auf, als für flüssige Medien notwendig.

Heizvorrichtungen für flüssige Medien sind mit einem geschlossenen Gehäuse versehen, die mit einem Fluidkanal ausgebildet sind mit einem Fluideinlass und einem Fluidauslass, wobei in das Gehäuse ein Heizelement ragt, das mit einem PTC-Element beheizt wird.

Diese Heizvorrichtung für flüssige Medien weisen den Nachteil auf, dass die Wärme in einem anderen Bereich erzeugt wird, als in dem Fluidkanal, durch welchen das flüssige Medium strömt, das erwärmt werden soll. Dadurch wird aufgrund der vorhandenen Übergangswiederstände eine verzögerte Erwärmung erreicht, die als nachteilig zu erachten ist.

GB 755 570 A und WO 2009/050631 offenbaren Heizvorrichtungen für flüssige Medien wobei innerhalb des Gehäuses Induktionsspule angeordnet sind. Nachteilig an den Lösungen im Stand der Technik ist insbesondere, dass die Effizienz der bekannten Heizvorrichtungen niedrig ist und der Aufbau teilweise sehr komplex.

### Darstellung der Erfindung, Aufgabe, Lösung, Vorteile

Daher ist es die Aufgabe der vorliegenden Erfindung eine Heizvorrichtung bereitzustellen, die geeignet ist ein Fluid schnell und kostengünstig zu erwärmen, wobei die Aufheizung unmittelbar an dem zu erwärmenden Fluid stattfindet.

Die Aufgabe der vorliegenden Erfindung wird durch eine Heizvorrichtung mit den Merkmalen des Anspruchs 1 gelöst.

Ein Ausführungsbeispiel der Erfindung betrifft eine Heizvorrichtung mit einem Gehäuse mit einem darin angeordneten Fluidkanal mit einem Fluideinlass und einem Fluidauslass, wobei in dem Gehäuse eine ein magnetisches Wechselfeld erzeugende Spule vorgesehen ist, welche durch ein Spulengehäuse von dem Fluidkanal abgedichtet abgeteilt ist, wobei weiterhin zumindest ein metallisches Flächenheizelement vorgesehen ist, welches durch das magnetische Wechselfeld aufheizbar ist, wobei das zumindest eine Flächenheizelement im Fluidkanal angeordnet ist, wobei der Fluidkanal zumindest in einen ersten Kanal und einen zweiten Kanal unterteilt ist, wobei die die Kanäle begrenzenden Wandungen durch das Spulengehäuse und/oder durch ein Flächenheizelement gebildet sind.

Das magnetische Wechselfeld kann dabei durch eine oder mehrere stromdurchflossene Spulen erzeugt werden. Die Spule induziert Wirbelströme in den sogenannten Flächenheizelementen. Die Flächenheizelemente sind vorteilhafterweise aus einem metallische Material gebildet und können in ihrer Form an die jeweilige Heizvorrichtung angepasst werden. Die Wirbelströme in den Flächenheizelementen führen zu einer Erwärmung dieser und somit zu einer Erwärmung eines an den Flächenheizelementen vorbeiströmenden Fluids.

Die Spulen sind vorteilhafterweise in einem Gehäuse aufgenommen, welches aus einem elektrisch nicht leitenden Material, wie beispielsweise Kunststoff, gebildet ist. Die Spule kann einfach oder mehrfach, insbesondere doppelt, gewickelt sein. Die im Spulengehäuse eingebettete und/oder vergossene Spule befindet sich direkt in dem zu erwärmenden Fluidstrom innerhalb der Heizvorrichtung. So kann die Abwärme der Spule direkt in das zu erwärmende Fluid eingeleitet werden und gleichzeitig wird die Spule direkt vom Fluidstrom gekühlt.

Die sich im Fluidstrom befindlichen Flächenheizelemente können beidseitig oder einseitig vom Fluid umströmt werden. Vorteilhafterweise weist das Material der Flächenheizelemente einen deutlich höheren spezifischen elektrischen Widerstand auf als das gut leitende Kupfer der Induktionsspule, welches vorteilhafterweise ein Hochfrequenzkupfer ist. Dies begünstigt einen guten Wirkungsgrad für die Wandlung der elektromagnetischen Energie in Wärmeenergie.

Innerhalb des Gehäuses sind somit die Induktionsspule in ihrem Spulengehäuse und die metallischen Flächenheizelemente angeordnet.

Durch die berührungslose Übertragung der Energie in das Fluid kann mit der beschriebenen Erfindung die Hochspannung in der Spule vom Fluidstrom in der Heizvorrichtung getrennt werden.

Die Außengeometrie des Heizers kann beispielsweise zylindrisch oder flach ausgeführt werden. In der zylindrischen Form wird die Spule als Zylinderspule gewickelt und die Heizbleche als Rohr ausgeführt. In der flachen Form wird die Spule flach gewickelt und die Heizbleche als ebene Bleche ausgeführt und benachbart zu der Spule angeordnet.

In einem Ausführungsbeispiel der Erfindung kann es vorgesehen sein, dass der Fluidkanal und/oder die Kanäle des Fluidkanals ringförmig ausgebildet ist und das Spulengehäuse und/oder das Flächenheizelement hohlzylindrisch ausgeformt sind und voneinander abweichende Durchmesser aufweisen und ineinander eingesteckt sind.

Auch ist es zu bevorzugen, wenn das Flächenheizelement und/oder die Spule und/oder das Spulengehäuse konzentrisch zueinander angeordnet sind.

Dies ist insbesondere vorteilhaft, um die Gestaltung der einzelnen sich ergebenden Kanäle vorteilhaft durchführen zu können.

Mindestens ein Flächenheizelement ist radial innerhalb der Spule angeordnet und mindestens ein Flächenheizelement ist radial außerhalb der Spule angeordnet.

Auf diese Weise kann das entstehende magnetische Wechselfeld besonders vorteilhaft genutzt werden, da es sowohl radial nach innen als auch radial nach außen von der Spule abstrahlt.

Auch ist es zweckmäßig, wenn zwei aneinander angrenzende Kanäle im Gleichstrom oder im Gegenstrom von einem Fluid durchströmt werden.

Je nach Gestaltung der einzelnen Kanäle und der Fluidübergänge zwischen den Kanälen, kann sich vorteilhaft eine Durchströmung im Gleichstrom oder im Gegenstrom ergeben.

Darüber hinaus ist es vorteilhaft, wenn zumindest ein Flächenheizelement aus einem magnetischen Material gebildet ist.

Durch ein magnetisches Material kann die Ausbreitung des magnetischen Wechselfeldes eingedämmt werden. Auf diese Weise kann eine unbeabsichtigte Auswirkung des magnetischen Wechselfeldes auf angrenzende Strukturen und Elemente abgemildert oder vollständig unterbunden werden.

Die Flächenheizelemente in der Kanäle einsetzbar sind, wobei die jeweiligen Kanäle durch die Flächenheizelemente in zwei Teilkanäle aufteilbar sind.

Auf diese Weise kann der hydraulische Durchmesser des jeweiligen Kanals angepasst werden, außerdem kann das Strömungsbild innerhalb des Kanals beeinflusst werden.

Auch ist es vorteilhaft, wenn das Flächenheizelement welches den Kanal in die beiden Teilkanäle unterteilt im Gleichstrom umströmt wird.

Außerdem ist es zweckmäßig, wenn ein Flächenheizelement und/oder das Spulengehäuse an einer ihrer vom Fluid umströmbaren Flächen Drallelemente und/oder Turbulenzelemente aufweist.

Auf diese Weise kann das Strömungsbild innerhalb der Kanäle verbessert werden. Insbesondere kann eine bessere Durchmischung und damit eine höhere Temperaturhomogenisierung erreicht werden.

Gemäß einer besonders günstigen Weiterbildung der Erfindung, kann es vorgesehen sein, dass ein Flächenheizelement aus einem Material gebildet ist, welches im Vergleich zu dem Material der Spule einen höheren elektrischen Widerstand aufweist.

Ein Material mit einem höheren elektrischen Widerstand als die das magnetische Wechselfeld erzeugende Spule ist besonders vorteilhaft, um eine möglichst starke Erwärmung der Flächenheizelemente zu erzeugen. Dies steigert die Effizienz der gesamten Heizvorrichtung. Besonders vorteilhaft ist dabei eine Materialdicke der Flächenheizelemente von ca. 0,08 mm bis 0,5 mm.

Weiterhin ist es zu bevorzugen, wenn zumindest ein Flächenheizelement mindestens eine Öffnung aufweist, durch welche ein Fluidübertritt zwischen aneinander angrenzenden Kanälen realisierbar ist.

Dadurch kann die Fluidströmung verbessert werden und eine gleichmäßigere Verteilung des Fluids erreicht werden.

Auch ist es zweckmäßig, wenn mindestens in einen der Kanäle ein Element zur Regulierung des hydraulischen Durchmessers des Kanals einbringbar ist.

Über das Element kann dabei vorteilhafterweise sowohl der hydraulische Durchmesser angepasst werden als auch die Strömungsführung innerhalb eines Kanals. Ein Beispiel für ein solches Element ist ein Dorn, welcher in einen der Kanäle eingeführt werden kann.

Darüber hinaus ist es vorteilhaft, wenn innerhalb und/oder außerhalb des Spulengehäuses ein Temperatursensor angeordnet ist.

Über einen Temperatursensor können vorteilhaft die Temperaturen unterschiedlicher Elemente erfasst werden. Beispielsweise kann die Temperatur der Spule erfasst werden oder des Fluids an unterschiedlichen Stellen in der Heizvorrichtung. Besonders vorteilhaft ist ein Temperatursensor in einem Element integriert, welches zur Anpassung des hydraulischen Durchmessers eines Kanals des Fluidkanals in die Heizvorrichtung eingebracht wurde.

Auch ist es zu bevorzugen, wenn der Druckverlust in aneinander angrenzenden Kanälen mit zunehmender Strömungsweglänge innerhalb der Heizvorrichtung zunehmend oder abnehmend ist.

Um sicherzustellen, dass beim Übertritt von einem Kanal in den nächsten Kanal das Fluid sich in dem jeweiligen Kanal gleichförmig verteilt, sollte der fluidseitige Druckverlust von Kanal zu Kanal leicht ansteigen.

Zusätzlich sollte der fluidseitige Druckverlust der gesamten Heizvorrichtung möglichst gering sein, um eine möglichst kleine Pumpenleistung der elektrischen Fluidpumpe realisieren zu können.

Eine möglichst optimale Abstimmung der Kanäle innerhalb des Fluidkanals erhöht zusätzlich die Heizleistung. Grund hierfür ist, dass die Strömungsgeschwindigkeit und dadurch der Wärmeübergang von den Flächenheizelementen zum Fluid positiv beeinflusst werden kann. Auch kann so eine vollständige homogene Beaufschlagung der Kanäle bzw. des Fluidkanals mit dem Fluid erreicht werden.

Auch ist es vorteilhaft, wenn der Druckverlust in aneinander angrenzenden Kanälen mit zunehmender Strömungsweglänge innerhalb der Heizvorrichtung stetig zunehmend ist.

In einer alternativen Ausführungsform kann es vorgesehen sein, dass ein erstes Flächenheizelement, ein zweites Flächenheizelement und ein drittes Flächenheizelement vorgesehen ist, wobei der Fluidkanal durch die Flächenheizelemente in einen ersten Kanal, einen zweiten Kanal, einen dritten Kanal und einen vierten Kanal unterteilt wird, wobei einer der Kanäle durch das dritte Flächenheizelement in zwei Teilkanäle unterteilbar ist.

Eine Anordnung von mehreren Flächenheizelementen ist besonders vorteilhaft, da auf diese Weise die Heizleistung der Heizvorrichtung insgesamt erhöht werden kann. Über die Anpassung der Abstände der einzelnen Flächenheizelemente zueinander kann eine Optimierung der Heizvorrichtung in Abhängigkeit von der Feldstärke des magnetischen Wechselfeldes erreicht werden.

Weiterhin ist es vorteilhaft, wenn radial innerhalb der Spule das erste Flächenheizelement angeordnet ist und radial außerhalb der Spule das zweite Flächenheizelement und das dritte Flächenheizelement angeordnet ist.

Auch ist es vorteilhaft, wenn die Heizleistung der Heizvorrichtung über eine Anpassung der Frequenz der Betriebsspannung angepasst werden kann. Dies ist besonders vorteilhaft, wenn unterschiedliche Spannungsniveaus bei der Betriebsspannung genutzt werden sollen.

Weiterhin ist es zu bevorzugen, wenn die Flächenheizelemente eine Strukturierung und/oder eine Wellenform aufweisen.

Eine solche Gestaltung der Flächenheizelemente kann besonders vorteilhaft sein, um die Heizleistung der Heizvorrichtung insgesamt zu erhöhen.

Auch ist es vorteilhaft, wenn das Flächenheizelement einseitig oder beidseitig von einem Fluid beströmbar ist.

Das Flächenheizelement steht bevorzugt in direktem Kontakt mit dem durch den Fluidkanal durchströmenden Fluid. Dadurch wird eine gute und schnelle Erwärmung des Fluids erreicht.

Weiterhin kann es besonders vorteilhaft sein, wenn das Flächenheizelement beidseitig von einem Fluid beströmbar ist, wobei die Strömungsrichtung des Fluids auf der einen Seite des Flächenheizelementes gleich oder entgegengesetzt der Strömungsrichtung auf der anderen Seite des Flächenheizelementes ist. Dadurch wird das Fluid seriell erst an der einen Seite und danach an der anderen Seite des Flächenheizelementes vorbei geführt. Dies steigert die Effektivität der Erwärmung.

Ein bevorzugtes Ausführungsbeispiel ist dadurch gekennzeichnet, dass das ein magnetisches Wechselfeld erzeugende Element ein im Wesentlichen ebenes Element und/oder ein hohlzylindrisches Element ist.

Auch ist es zu bevorzugen, wenn das Flächenheizelement ein im Wesentlichen ebenes Element und/oder ein hohlzylindrisches Element ist.

Darüber hinaus kann es vorgesehen sein, dass das ein magnetisches Wechselfeld erzeugende Element eine im Wesentlichen ebene Spule und/oder eine hohlzylindrische Spule ist.

Auch ist es vorteilhaft, wenn eine Steuereinheit mit dem Gehäuse verbunden oder in dieses integriert ist.

Darüber hinaus kann es vorteilhaft sein, wenn das Gehäuse aus einem magnetfeldabsorbierenden oder für magnetische Wechselfelder intransparenten Material besteht.

Weiterhin ist es zweckmäßig, wenn das Spulengehäuse aus einem magnetfeldtransparenten Material besteht.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig.1: eine Ansicht einer erfindungsgemäßen Heizvorrichtung mit einer am Gehäuse integrierten Steuereinheit,
- Fig. 2: eine weitere Ansicht der Heizvorrichtung gemäß Fig. 1, wobei die Heizvorrichtung in einem Teilschnitt dargestellt ist, wodurch das Innenleben der Heizvorrichtung gezeigt ist,
- Fig. 3: eine Explosionsdarstellung einer erfindungsgemäßen Heizvorrichtung gemäß den Fig. 1 und 2,
- Fig. 4: eine Schnittansicht der Heizvorrichtung gemäß den Fig. 1 bis 3,
- Fig. 5: eine weitere Schnittansicht einer erfindungsgemäßen Heizvorrichtung gemäß der Fig. 1 bis 4, und
- Fig. 6: eine Detailansicht der Heizvorrichtung, wobei der Blick des Betrachters entlang der axialen Haupterstreckungsrichtung der Heizvorrichtung orientiert ist.

### Bevorzugte Ausführung der Erfindung

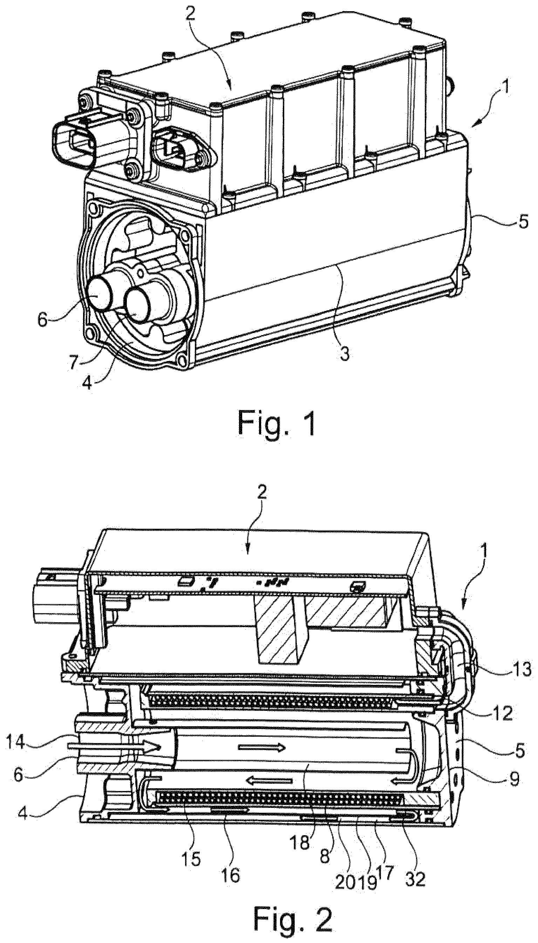

Die Fig. 1 zeigt eine perspektivische Ansicht einer Heizvorrichtung 1. Die Heizvorrichtung 1 weist ein Gehäuse 3 auf, an welches eine Steuereinheit 2 angebunden ist. Die Steuereinheit 2 ist dabei beispielsweise wie in Fig. 1 gezeigt, über Schraubverbindungen am Gehäuse 3 befestigt. Das Gehäuse 3 bildet einen zylindrischen Innenraum aus, in welchem die Komponenten der Heizvorrichtung 1 integriert sind. An den axialen Endbereichen des Gehäuses 3 sind Deckel 4, 5 vorgesehen, welche das Gehäuse 3 endseitig in axialer Richtung verschließen. Der Deckel 4 weist einen Fluidanschluss 6 und einen Fluidanschluss 7 auf, welche je nach Strömungsrichtung innerhalb der Heizvorrichtung 1 jeweils als Fluidzulauf bzw. als Fluidablauf verwendet werden können. In einer alternativen Ausführung kann das Spulengehäuse auch einteilig mit einem der Deckel ausgeführt sein. Das Spulengehäuse übernimmt in diesem Fall die Funktion des Deckels, wodurch das Gehäuse endseitig in zumindest einer axialen Richtung durch das Spulengehäuse verschließbar ist. An den Deckeln 4, 5 oder an einem einteilig mit dem Spulengehäuse ausgeführten Deckel können Dichtelemente, wie beispielsweise O-Ringe, vorgesehen sein.

Die Fig. 2 zeigt eine Schnittansicht, durch die in Fig. 1 gezeigte Heizvorrichtung 1. Im oberen Bereich der Fig. 2 ist die Steuereinheit 2 dargestellt, auf welche im Nachfolgenden nicht näher eingegangen wird.

Im Inneren des Gehäuses 3 ist ein Spulengehäuse 9 angeordnet, welches einteilig oder auch mehrteilig ausgebildet ist. Innerhalb des Spulengehäuses 9 ist eine Aussparung 32 vorgesehen, in welche eine Spule 8 eingesetzt ist. Die Spule 8 bildet einen hohlzylindrischen Körper, welcher aus einer Wicklung von elektrisch leitfähigem Material gebildet ist.

Die Spule 8 ist über eine elektrische Kontaktierung 12 mit der Steuereinheit 2 verbunden. Hierzu ist außerhalb (wahlweise auch innerhalb) des Gehäuses 3 ein Verbindungsbereich 13 vorgesehen, durch welchen die elektrische Kontaktierung 12 in die Steuereinheit 2 geführt werden kann.

Das Spulengehäuse 9, kann in seinem Inneren zusätzlich zur Spule 9 ein Medium aufweisen, welches einerseits die Spule 8 fluiddicht im Inneren des Spulengehäuses 9 einschließt und andererseits die thermische Leitfähigkeit innerhalb des Spulengehäuses 9 erhöht.

Im Zentrum des Spulengehäuses 9 ist ein Rohr 18 angeordnet, welches einen Kanal 14 ausbildet, durch welchen ein Fluid strömen kann. Der Kanal 14 steht dabei direkt mit dem Fluidanschluss 6 in Fluidkommunikation. Die nachfolgenden Kanäle 14, 15, 16 und 17 sind dabei jeweils die Kanäle des Fluidkanals innerhalb der Heizvorrichtung. Sie sind der Einfachheit halber jeweils als Kanal bezeichnet und bilden aneinandergereiht den Fluidkanal, welcher vom Fluideinlass zum Fluidauslass der Heizvorrichtung führt.

In Fig. 2 ist der Fluidanschluss 6 als Fluidzufluss ausgebildet. Ein Fluid kann demnach durch den Fluidanschluss 6 entlang des Kanals 14 im Rohr 18 strömen und an dem, dem Fluidanschluss 6 abgewandten Endbereich des Rohrs 18 in einen Bereich zwischen dem Rohr 18 und dem Spulengehäuse 9 strömen.

Das Rohr 18 ist dabei auf einen Absatz, welcher am Inneren des Deckels 4 bzw. am Fluidanschluss 6 angebracht ist aufgesteckt und dort mit diesem verbunden. Der dem Fluidanschluss 6 abgewandte Endbereich des Rohrs 18 ist zum Deckel 5 derart beabstandet, dass sich ein Luftspalt zwischen dem Rohr 18 und dem Deckel 5 bzw. Abschlussbereich des Spulengehäuses ergibt, durch welchen ein Fluid in den Kanal 15, welcher zwischen dem Rohr 18 und dem Spulengehäuse 9 ausgebildet ist, einströmen kann. Das Fluid strömt dann durch den Kanal 15 hin zum Deckel 4. Zwischen dem Spulengehäuse 9 und dem Deckel 4 ist ein Luftspalt vorgesehen, durch welchen das Fluid schließlich in einen Kanal 16 überströmen kann, welcher zwischen dem Spulengehäuse und einem Flächenheizelement 19, welches ebenfalls als hohlzylindrischer Körper ausgebildet ist, gebildet ist.

Das Fluid kann dann schließlich in Richtung des Deckels 5 strömen. Zwischen dem Flächenheizelement 19 und dem Deckel 5 bzw. dem Abschlussbereich des Spulengehäuses ist ebenfalls ein Luftspalt vorgesehen, durch welchen das Fluid abermals umgelenkt wird. Zwischen dem Flächenheizelement 19 und der Gehäuseinnenwand des Gehäuses 3 strömt das Fluid entlang des Kanals 17 wieder in Richtung des Deckels 4. Zwischen dem Flächenheizelement 19 und der Gehäuseinnenwand kann ein weiteres Flächenheizelement 20 vorgesehen werden.

Dieses Flächenheizelement 20 unterteilt dabei den Kanal 17 zwischen dem Flächenheizelement 19 und der Gehäuseinnenwand des Gehäuses 3 in zwei kleinere Teilkanäle 17a und 17b. Hierzu kann das Flächenheizelement 20 beispielsweise wechselseitig ausgestellte Bereiche aufweisen, welche durch Schlitzungen aus der zylindrischen Mantelfläche des Flächenheizelementes 20 ausgelöst sind. Sowohl die dem Flächenheizelement 19 als auch die dem Gehäuse 3 zugewandte Seite des Flächenheizelementes 20 wird dadurch von dem Fluid in der gleichen Richtung überströmt. In einer alternativen Ausführung kann auch in die anderen Kanäle 14, 15, 16 jeweils ein Flächenheizelement oder ein anderes Verdrängungselement eingeführt werden, welches den jeweiligen Kanal in kleinere Teilkanäle unterteilt.

Über radial angeordnete Öffnungen in dem Deckel 4 kann das Fluid schließlich über den in Fig. 2 nicht gezeigten Fluidanschluss 7 aus der Heizvorrichtung 1 ausströmen.

Das Spulengehäuse 9 ist derart in der Heizvorrichtung angeordnet, dass es beidseitig von einem Fluid umströmt werden kann. Auf diese Weise kann die entstehende Wärme innerhalb der Spule 8 besonders gut vom Fluid abtransportiert werden und zusätzlich auf diese Weise ein Aufheizeffekt für das Fluid erzeugt werden.

An den dem Fluid zugewandten Außenflächen des Spulengehäuses 9 können vorteilhafterweise Oberflächenerweiterungselemente wie beispielsweise Drallelemente oder Turbulenzelemente vorgesehen sein. Auf diese Weise kann die Strömung eines Fluids derart positiv beeinflusst werden, dass ein Wärmeübergang zwischen den Flächenheizelementen innerhalb der Heizvorrichtung 1 und dem Fluid verbessert wird.

Die in der Heizvorrichtung 1 gezeigten Elemente, wie das Rohr 18 oder die Flächenheizelemente 19 und 20, welche aus einem metallischen Werkstoff bestehen, können aufgrund eines Induktionseffektes erwärmt werden. Die Wärme kann dabei auf das um die Flächenheizelemente strömende Fluid übertragen werden, wodurch das Fluid erhitzt wird.

Die Spule 8 ist über die elektrischen Kontaktierungen 12 vorzugsweise mit einer Spannungsquelle versehen, welche eine Wechselspannung an die Spule 8 weitergibt. Auf diese Weise kann ein magnetisches Wechselfeld erzeugt werden, welches zu einer Aufheizung der metallischen Elemente, wie beispielsweise des Rohrs 18 und den Flächenheizelementen 19, 20, führen kann.

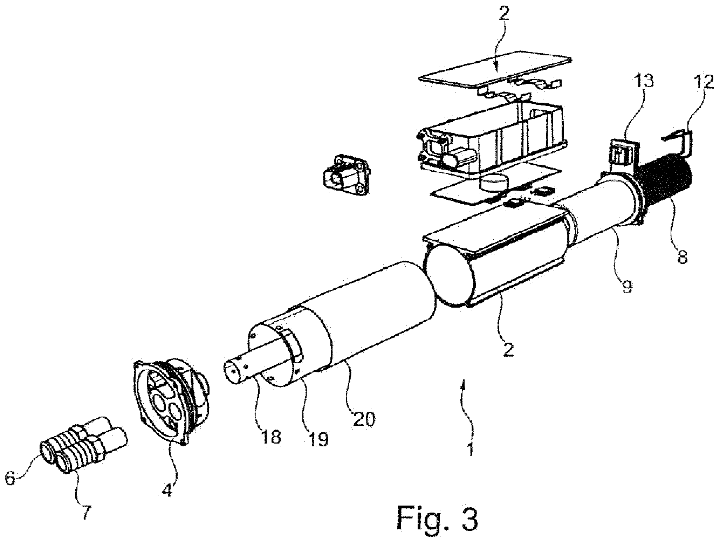

Die Fig. 3 zeigt eine Explosionsdarstellung der Heizvorrichtung 1 wie sie bereits in Fig. 1 und 2 gezeigt wurde. In Fig. 3 ist insbesondere zu erkennen, wie die einzelnen Elemente der Heizvorrichtung 1 ineinander angeordnet sind. So sind die Fluidanschlüsse 6 bzw. 7 in Öffnungen des Deckels 4 einsetzbar und mit dem Rohr 18 bzw. dem Flächenheizelement 19 und einem Flächenheizelement 20 in das Gehäuse 2 einsetzbar. Das Spulengehäuse 9 und die Spule 8 mit ihren elektrischen Kontaktierungen 12 können gleichsam von der gegenüberliegenden Seite in das Gehäuse 2 eingeführt werden. Auf der Oberseite des Gehäuses 3 ist die Steuereinheit 2 vorgesehen, welche zur Ansteuerung der Spule 8 vorgesehen ist.

Durch die Gestaltung des Spulengehäuses 9 kann erreicht werden, dass die Spule 8 vollständig von dem durch die Heizvorrichtung 1 strömenden Fluid getrennt ist. Auf diese Weise kann ein elektrischer Kurzschluss vermieden werden. Weiterhin ist durch die Integration der Spule 8 und des Spulengehäuses 9, welches von Fluid umströmt wird, ein vorteilhafter Wärmeübergang von der Spule auf das Fluid möglich.

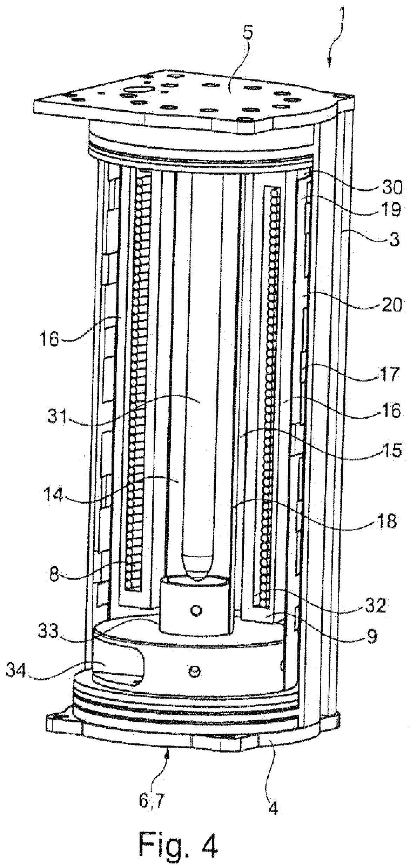

Die Fig. 4 zeigt eine weitere schematische Ansicht der Heizvorrichtung 1.

Durch eine Bestromung der Spule 8, beispielsweise mit einer Wechselspannung, kann ein magnetisches Feld innerhalb der Heizvorrichtung 1 erzeugt werden. Sowohl das Rohr 18 als auch die Flächenheizelemente 19, 20 sind aus einem metallischen Material gebildet.

Aufgrund des magnetischen Wechselfeldes, das durch die Spule 8 erzeugt wird, kann das Rohr 18 sowie die Flächenheizelemente 19, 20 erwärmt werden. Sowohl an den Flächenheizelementen 19, 20 als auch am Rohr 18 kann ein Fluid vorbeiströmen, welches im Vorbeiströmen die Wärme von den Flächenheizelementen 19, 20 bzw. dem Rohr 18 aufnimmt. Das Rohr 18 bildet ein weiteres Flächenheizelement.

Das Flächenheizelemente 18 und 20 sind vorteilhafterweise aus einem magnetischen Material gebildet. Auf diese Weise ist es möglich das magnetische Wechselfeld, welches durch die Spule 8 erzeugt wird, in seiner räumlichen Ausdehnung einzudämmen. Dies ist insbesondere vorteilhaft, um die Auswirkungen des magnetischen Wechselfeldes außerhalb des Gehäuses 3 möglichst zu minimieren. Außerdem kann über ein Rohr 18 aus einem magnetischen Material ein wechselfeldfreier Innenbereich innerhalb der Heizvorrichtung 1 realisiert werden.

Das Eindämmen des magnetischen Wechselfeldes ist insbesondere vorteilhaft, um ungewünschte Wechselwirkungen mit benachbarten elektrischen oder elektronischen Systemen möglichst zu vermeiden. Außerdem ist es vorteilhaft, um ungewollte Erwärmungen anderer metallischer Materialien auszuschließen. Weiterhin kann durch eine Begrenzung des magnetischen Wechselfeldes auf einen konzentrierten vorbestimmten Raum eine höhere Effizienz der Heizvorrichtung 1 insgesamt erreicht werden, da die Verluste, welche aufgrund der Streuung des magnetischen Wechselfeldes entstehen, geringer sind.

Das Gehäuse 3 kann in einer vorteilhaften Ausgestaltung aus einem nichtmetallischen oder nicht elektrisch leitenden bzw. nicht magnetischen Material, wie beispielsweise einem Kunststoff, gebildet sein. Dies gilt insbesondere dann, wenn das äußerste Flächenheizelement 20 aus einem magnetischen Material gebildet ist. Durch das Flächenheizelement 20 wird dann nämlich bereits das magnetische Wechselfeld größtenteils eingedämmt, wodurch ungewollte Wechselwirkungen mit benachbarten Systemen und Strukturen vermieden werden.

In Fig. 4 ist weiterhin der Kanal 14, welcher sich im Inneren des Rohres 18 zwischen dem in das Rohr 18 eingeführten Dorn 31 und der Innenwandung des Rohres 18 ergibt, dargestellt. Der Dorn 31 kann dazu verwendet werden den hydraulischen Durchmesser des Kanals 14 zu reduzieren. Dies kann primär durch die geometrische Gestaltung des Doms 31 erreicht werden. Durch eine Anpassung des hydraulischen Durchmessers können die Strömungseigenschaften innerhalb der Heizvorrichtung 1 optimiert werden.

Weiterhin kann der Dorn 31, insbesondere an seiner Spitze, einen Temperatursensor aufweisen, der die Temperatur des Fluids, welches innerhalb der Heizvorrichtung 1 strömbar ist, benachbart zur Einströmstelle oder Ausströmstelle 6, 7 im Bereich des unteren Deckels 4 erfassen kann.

Zwischen dem Rohr 18 und dem oberen Deckel 5 bzw. Abschlussbereich des Spulengehäuses ist ein radial umlaufender Luftspalt ausgebildet, durch welchen das Fluid aus dem Kanal 14 herausströmen kann. Zwischen dem Spulengehäuse 9 und dem unteren Deckel 4 ist ein radial umlaufender Luftspalt 33 ausgebildet, durch welchen das Fluid vom Kanal 15 in den Kanal 16 strömen kann. Schließlich ist zwischen dem Flächenheizelement 19 und dem oberen Deckel 5 bzw. Abschlussbereich des Spulengehäuses ein radial umlaufender Luftspalt 30 ausgebildet, durch welchen das Fluid vom Kanal 16 in den Kanal 17 überströmen kann. Aus dem Kanal 17 kann das Fluid schließlich über einen radial verlaufenden Kanal 34 an einer radialen Randfläche eines zylindrischen Abschnitts des unteren Deckels 4 zu einem der Fluidanschlüsse 6, 7 strömen und dort aus der Heizvorrichtung 1 hinaus.

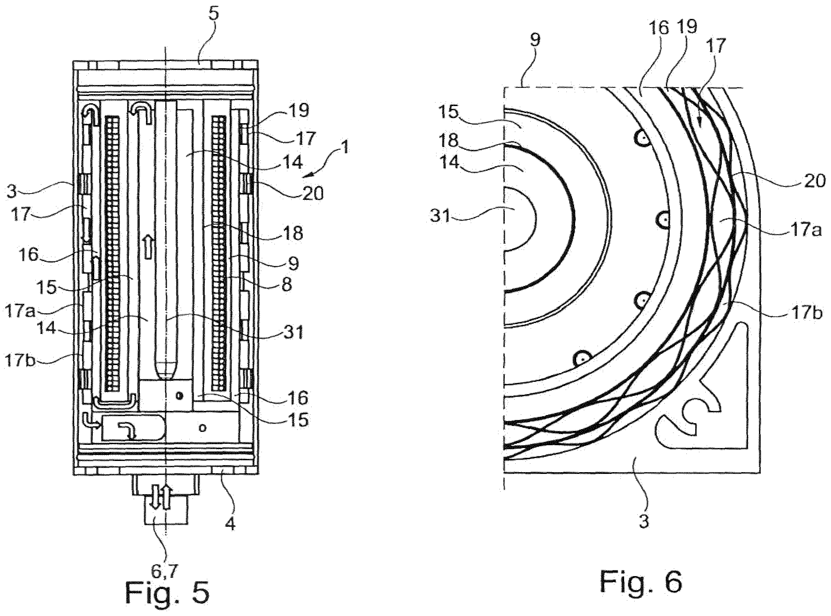

Die Fig. 5 zeigt eine Schnittansicht durch die Heizvorrichtung 1, wobei der Schnitt entlang der Mittelachse des zentralen Doms 31 verläuft.

In der Ansicht der Fig. 5 sind die sich zwischen den Flächenheizelemente 18, 19 und 20 ergebenden Kanäle 14, 15, 16 und 17 zu erkennen. In der Fig. 5 ist durch eine Mehrzahl von Pfeilen eine mögliche Durchströmung der Heizvorrichtung 1 dargestellt. Dabei ist zu beachten, dass die gezeigten Kanäle 14, 15, 16 und 17 jeweils radial umlaufend ringförmig ausgebildet sind. Eine Umkehr der Durchströmungsrichtung ist in alternativen Ausführungsformen ebenfalls vorsehbar.

Das Rohr 18, das Spulengehäuse 9 und das Flächenheizelement 19 werden an ihren beiden jeweiligen zylindrischen Mantelflächen in Gegenstrom umströmt. Das Flächenheizelement 20, welches den Kanal 17 in zumindest zwei Teilkanäle 17a und 17b unterteilt, wird hingegen an seien beiden zylindrischen Mantelflächen im Gleichstrom umströmt.

Durch eine alternative Gestaltung der Strömungsführung können auch weitere im Gleichstrom oder im Gegenstrom umströmte Bereiche geschaffen werden. Die Gestaltung der Heizvorrichtung 1, wie in den Fig. 1 bis 5 gezeigt, führt dazu, dass sowohl der Fluidzufluss 6, 7 als auch der Fluidabfluss 6, 7 am gleichen axialen Endbereich der Heizvorrichtung 1 angeordnet sind.

Radial innerhalb der Spule 8 ist mit dem Rohr 18 ein Flächenheizelement angeordnet und radial außerhalb der Spule 8 sind die beiden Flächenheizelemente 19, 20 angeordnet. Je nach gewünschter Leistungsverteilung innerhalb der Heizvorrichtung 1 kann die Verteilung der Flächenheizelemente auch abweichen. Aufgrund der Gestaltung der Spule 8 als hohlzylindrische Einheit, ergibt sich insbesondere radial innerhalb der Spule 8 ein besonders starkes magnetisches Wechselfeld.

Die Fig. 6 zeigt eine Teilansicht der Heizvorrichtung, wobei der Blick entlang der Mittelachse des Dorns 31 gerichtet ist. Es ist die Ausgestaltung der einzelnen Kanäle 14, 15, 16 und 17 zwischen den Flächenheizelemente 18, 19 und 20 und dem Spulengehäuse 9 zu erkennen. Wie bereits weiter oben angedeutet, kann der hydraulische Durchmesser der Kanäle 14, 15, 16 und 17 durch das Einbringen von Verdrängungselementen, wie etwa dem Dorn 31, angepasst werden. Dadurch kann die Durchströmung der Heizvorrichtung optimiert werden.

In der Ansicht der Fig. 6 ist insbesondere die Ausgestaltung des Flächenheizelementes 20 zu erkennen. Aus einer zylindrischen Fläche sind mehrere Abschnitte sowohl radial nach außen als auch radial nach innen ausgelenkt, wodurch sich eine wellenartige Struktur ergibt. Mit den einzelnen ausgelenkten Abschnitten liegt das Flächenheizelement 20 sowohl an der Außenfläche des Flächenheizelementes 19 als auch an der Innenfläche des Gehäuses 3 an.

Durch die einzelnen ausgelenkten Abschnitte ergeben sich innerhalb des Kanals 17 mehrere Teilkanäle, die von einem Fluid durchströmbar sind. Über die Gestaltung des Flächenheizelementes 20 kann der hydraulische Durchmesser des Kanals 17 und somit die Strömungseigenschaften innerhalb des Kanals 17 beeinflusst werden.

Vorteilhafterweise ist das innerste Flächenheizelement 18 aus einem ferritischen Material gebildet, wobei das mittlere Flächenheizelement 19 aus einem austenitischen Material gebildet und das äußerste Flächenheizelement 20 aus einem ferritischen Material.

Je nach Anordnung wird dabei ein Anteil der Gesamtheizleistung von 20% bis 40% von dem inneren Flächenheizelement 18, ein Anteil von 50% bis 70% von dem mittleren Flächenheizelement 19 und ein Anteil von 5% bis 15% von dem äußeren Flächenheizelement 20 erzeugt. Die ferritischen Materialien sind dabei geeignet, um das magnetische Wechselfeld der Spule 8 einzudämmen.

Die Heizleistung einer solchen Heizvorrichtung 1 bewegt sich vorteilhafterweise in einem Bereich von 3kW bis 7kW. Dabei weisen die Flächenheizelemente 18, 19, 20 vorzugsweise eine wärmeübertragende Oberfläche von ungefähr 10dm² bis 25dm² auf. Die Materialdicke der Flächenheizelemente 18, 19, 20 beträgt vorteilhafterweise 0,08mm bis 0,5mm, dabei vorzugsweise 0,3mm. Ein bevorzugtes Material ist ein Stahlwerkstoff.

Vorteilhafterweise ist das Gehäuse 3 aus einem Aluminiumwerkstoff gefertigt und weist eine Materialstärke von 1,5mm bis3 mm, dabei vorzugsweise 2mm auf.

Der Dorn 31 weist in einer vorteilhaften Ausführung einen Durchmesser von 6mm bis 15mm auf, dabei vorzugsweise 10mm.

Der Kanal 14 ist vorzugsweise 4mm bis 10mm, dabei ungefähr 7mm breit. Der hydraulische Durchmesser des Kanals 14 liegt bei ungefähr 8mm bis 20mm, vorzugsweise 14mm.

Der Kanal 15 ist vorzugsweise 3mm bis7 mm, dabei ungefähr 5 mm breit. Der hydraulische Durchmesser des Kanals 15 liegt bei ungefähr 6mm bis 14mm, vorzugsweise 10mm.

Der Kanal 16 ist vorzugsweise 2mm bis 6mm, dabei ungefähr 4mm breit. Der hydraulische Durchmesser des Kanals 16 liegt bei ungefähr 4mm bis 12mm, vorzugsweise 8mm.

Der Kanal 17 mit dem eingesteckten Flächenheizelement 20 ist in zwei Teilkanäle 17a, 17b unterteilt. Einer der Teilkanäle ist dabei 0mm bis 6mm, vorzugsweise 4mm breit und weist einen hydraulischen Durchmesser von 0mm bis 12mm, vorzugsweise 8mm auf. Der andere Teilkanal ist 0mm bis 4mm breit, dabei vorzugsweise ungefähr 2 mm und weist einen hydraulischen Durchmesser zwischen 0mm und 8mm auf, dabei vorzugsweise ungefähr 4 mm. Die Werte für den hydraulischen Durchmesser beziehen sich dabei auf ein nicht profiliertes Flächenheizelement 20.

Die beschrieben Größenordnungen beziehen sich auf eine spezielle Ausführung einer Heizvorrichtung. Auch darüber hinausgehende und davon abweichende Dimensionierungen sind in alternativen Ausführungsformen vorsehbar.

Alternativ zu den oben beschriebenen Ausführungsbeispielen kann sowohl der erste Kanal 14, 15 und/oder der zweite Kanal 16, 17 auch ohne Zwischenschaltung einer Wandung einteilig ausgebildet sein. Alternativ kann die Wandung unmittelbar am Gehäuse 3 oder an dem Spulengehäuse 9 anliegen. Dadurch kann insbesondere der äußerste Kanal und/oder auch der innerste Kanal auch ohne Zwischenwandung eines Flächenheizelements 18,19,20 ausgebildet sein. Das Flächenheizelement liegt dann vorzugsweise direkt am Gehäuse 3 oder an Spulengehäuse 9 oder an einem anderen Flächenheizelement oder an einer anderen Wandung an.

Bei der Gestaltung der Flächenheizelemente kann bei Anliegen des äußeren Flächenheizelements und des mittleren Flächenheizelements es derart gestaltet sein, dass die beiden Flächenheizelemente aneinander anliegen und miteinander verbunden sind oder diese als Bimetall oder anderweitig als Flächenverbund ausgebildet sind.

Das äußere Flächenheizelement kann dabei gelocht und/oder gewellt ausgebildet sein und dabei vollflächig und/oder punktuell an der Wand des Gehäuses 3 oder an der Außenwand des mittleren Flächenheizelements anliegen.

Die Ausführungsformen der Fig. 1 bis 6 sind beispielhaft und dienen der Verdeutlichung des Erfindungsgedankens. Sie besitzen keinen beschränkenden Charakter. Einzelne Merkmale der Ausführungsbeispiele können untereinander kombiniert werden.

## Patentansprüche

1. Heizvorrichtung (1) mit einem Gehäuse (3) mit einem darin angeordneten Fluidkanal mit einem Fluideinlass (6, 7) und einem Fluidauslass (6, 7), wobei in dem Gehäuse (3) eine ein magnetisches Wechselfeld erzeugende Spule (8) vorgesehen ist, welche durch ein Spulengehäuse (9) von dem Fluidkanal abgedichtet abgeteilt ist, wobei weiterhin zumindest ein metallisches Flächenheizelement (18, 19, 20) vorgesehen ist, welches durch das magnetische Wechselfeld aufheizbar ist, wobei der Fluidkanal zumindest in einen ersten Kanal (14, 15) und einen zweiten Kanal (16, 17) unterteilt ist, wobei die die Kanäle (14, 15, 16, 17) begrenzenden Wandungen durch das Spulengehäuse (9) und/oder durch ein Flächenheizelement (18, 19, 20) gebildet sind, wobei mindestens ein Flächenheizelement (18) radial innerhalb der Spule (8) angeordnet ist und mindestens ein Flächenheizelement (19, 20) radial außerhalb der Spule (8) angeordnet ist und **dadurch gekennzeichnet, dass** das zumindest eine Flächenheizelement (18, 19, 20) im Fluidkanal angeordnet ist, wobei mindestens ein Flächenheizelement (18, 19, 20) in dem ersten Kanal (14,15) und in dem zweiten Kanal (16,17) eingesetzt ist, wobei der erste Kanal (14,15) und der zweite Kanal (16,17) durch das Flächenheizelement (18, 19, 20) in zwei Teilkanäle (17a, 17b) aufgeteilt sind.

2. Heizvorrichtung (1) nach Anspruch 1, **dadurch gekenntzeichnet, dass** der Fluidkanal und/oder die Kanäle (14, 15, 16, 17) des Fluidkanals ringförmig ausgebildet ist und das Spulengehäuse (9) und/oder das Flächenheizelement (18, 19, 20) hohlzylindrisch ausgeformt sind und voneinander abweichende Durchmesser aufweisen und ineinander eingesteckt sind.

3. Heizvorrichtung (1) nach Anspruch 2, **dadurch gekennzeichnet, dass** das Flächenheizelement (18, 19, 20) und/oder die Spule (8) und/oder das Spulengehäuse (9) konzentrisch zueinander angeordnet sind.

4. Heizvorrichtung (1) nach einem der vorhergehenden Ansprüche, **dadurch gekennzeichnet, dass** zwei aneinander angrenzende Kanäle (14, 15, 16, 17) im Gleichstrom oder im Gegenstrom von einem Fluid durchströmt werden.

5. Heizvorrichtung (1) nach einem der vorhergehenden Ansprüche, **dadurch gekennzeichnet, dass** zumindest ein Flächenheizelement (18, 19, 20) aus einem magnetischen Material gebildet ist.

6. Heizvorrichtung (1) nach einem der vorhergehenden Ansprüche, **dadurch gekennzeichnet, dass** das Flächenheizelement (18, 19, 20), welches den Kanal (14, 15, 16, 17) in die beiden Teilkanäle unterteilt, im Gleichstrom umströmt wird.

7. Heizvorrichtung (1) nach einem der vorhergehenden Ansprüche, **dadurch gekennzeichnet, dass** ein Flächenheizelement (18, 19, 20) aus einem Material gebildet ist, welches im Vergleich zu dem Material der Spule (8) einen höheren elektrischen Widerstand aufweist.

8. Heizvorrichtung (1) nach einem der vorhergehenden Ansprüche, **dadurch gekennzeichnet, dass** zumindest ein Flächenheizelement (18, 19, 20) mindestens eine Öffnung aufweist, durch welche ein Fluidübertritt zwischen aneinander angrenzenden Kanälen (14, 15, 16, 17, 17a, 17b) realisierbar ist.

9. Heizvorrichtung (1) nach einem der vorhergehenden Ansprüche, **dadurch gekennzeichnet, dass** mindestens in einen der Kanäle (14, 15, 16, 17) ein Element (31) zur Regulierung des hydraulischen Durchmessers des Kanals (14, 15, 16, 17) einbringbar ist.

10. Heizvorrichtung (1) nach einem der vorhergehenden Ansprüche, **dadurch gekennzeichnet, dass** innerhalb und/oder außerhalb des Spulengehäuses (9) ein Temperatursensor angeordnet ist.

11. Heizvorrichtung (1) nach einem der vorhergehenden Ansprüche, **dadurch gekennzeichnet, dass** der Druckverlust in aneinander angrenzenden Kanälen (14, 15, 16, 17) mit zunehmender Strömungsweglänge innerhalb der Heizvorrichtung (1) zunehmend oder abnehmend ist.

12. Heizvorrichtung (1) nach einem der vorhergehenden Ansprüche, **dadurch gekennzeichnet, dass** der Druckverlust in aneinander angrenzenden Kanälen (14, 15, 16, 17) mit zunehmender Strömungsweglänge innerhalb der Heizvorrichtung (1) stetig zunehmend ist.

13. Heizvorrichtung (1) nach einem der vorhergehenden Ansprüche, **dadurch gekennzeichnet, dass** ein erstes Flächenheizelement (18), ein zweites Flächenheizelement (19) und ein drittes Flächenheizelement (20) vorgesehen ist, wobei der Fluidkanal durch die Flächenheizelemente (18, 19, 20) in einen ersten Kanal (14), einen zweiten Kanal (15), einen dritten Kanal (16) und einen vierten Kanal (17) unterteilt wird, wobei einer der Kanäle (17) durch das dritte Flächenheizelement (20) in zwei Teilkanäle unterteilt ist.

14. Heizvorrichtung (1) nach Anspruch 13, **dadurch gekennzeichnet, dass** radial innerhalb der Spule (8) das erste Flächenheizelement (18) angeordnet ist und radial außerhalb der Spule (8) das zweite Flächenheizelement (19) und das dritte Flächenheizelement (20) angeordnet ist.

## Claims

1. A heater (1) with a housing (3) with a fluid channel, disposed therein, with a fluid inlet (6, 7) and a fluid outlet (6, 7), wherein a coil (8), which generates an alternating magnetic field and is separated sealed from the fluid channel by a coil housing (9), is provided in the housing (3), wherein furthermore at least one metallic flat heating element (18, 19, 20) is provided, which can be heated by the alternating magnetic field, wherein the fluid channel is divided at least into a first channel (14, 15) and a second channel (16, 17), wherein the walls bounding the channels (14, 15, 16, 17) are formed by the coil housing (9) and/or by a flat heating element (18, 19, 20), wherein at least one flat heating element (18) is disposed radially within the coil (8) and at least one flat heating element (19, 20) is disposed radially outside the coil (8) and **characterised in that** the at least one flat heating element (18, 19, 20) is disposed in the fluid channel, wherein at least one flat heating element (18, 19, 20) is inserted in the first channel (14, 15) and in the second channel (16, 17), wherein the first channel (14, 15) and the second channel (16, 17) are divided into two sub-channels (17a, 17b) by the flat heating element (18, 19, 20).

2. The heater (1) according to claim 1, **characterised in that** the fluid channel and/or the channels (14, 15, 16, 17) of the fluid channel are configured ringshaped and the coil housing (9) and/or the flat heating element (18, 19, 20) are configured as a hollow cylinder and have diameters different from one another and are inserted into one another.

3. The heater (1) according to claim 2, **characterised in that** the flat heating element (18, 19, 20) and/or the coil (8) and/or the coil housing (9) are disposed concentrically to one another.

4. The heater (1) according to one of the preceding claims, **characterised in that** a fluid flows through two channels (14, 15, 16, 17) adjacent to one another in co-current flow or in counter-current flow.

5. The heater (1) according to one of the preceding claims, **characterised in that** at least one flat heating element (18, 19, 20) is made of a magnetic material.

6. The heater (1) according to one of the preceding claims, **characterised in that** a co-current flow flows around the flat heating element (18, 19, 20) dividing the channel (14, 15, 16, 17) into the two sub-channels.

7. The heater (1) according to one of the preceding claims, **characterised in that** a flat heating element (18, 19, 20) is made of a material that has a higher electrical resistance compared with the material of the coil (8).

8. The heater (1) according to one of the preceding claims, **characterised in that** at least one flat heating element (18, 19, 20) has at least one opening through which a fluid transfer between channels (14, 15, 16, 17, 17a, 17b) adjacent to one another is realisable.

9. The heater (1) according to one of the preceding claims, **characterised in that** an element (31) for regulating the hydraulic diameter of the channel (14, 15, 16, 17) can be inserted in at least one of the channels (14, 15, 16, 17).

10. The heater (1) according to one of the preceding claims, **characterised in that** a temperature sensor is disposed within and/or outside the coil housing (9).

11. The heater (1) according to one of the preceding claims, **characterised in that** the pressure loss in channels (14, 15, 16, 17) adjacent to one another increases or decreases with an increasing flow path length within the heater (1).

12. The heater (1) according to one of the preceding claims, **characterised in that** the pressure loss in channels (14, 15, 16, 17) adjacent to one another increases continuously with an increasing flow path length within the heater (1).

13. The heater (1) according to one of the preceding claims, **characterised in that** a first flat heating element (18), a second flat heating element (19), and a third flat heating element (20) are provided, wherein the fluid channel is divided into a first channel (14), a second channel (15), a third channel (16), and a fourth channel (17) by the flat heating elements (18, 19, 20), wherein one of the channels (17) can be divided into two sub-channels by the third flat heating element (20).

14. The heater (1) according to claim 13, **characterised in that** the first flat heating element (18) is disposed radially within the coil (8) and the second flat heating element (19) and the third flat heating element (20) are disposed radially outside the coil (8) .

## Revendications

1. Dispositif de chauffage (1) comprenant un carter (3) comportant un conduit de fluide disposé à l'intérieur dudit carter, ledit conduit de fluide ayant une entrée de fluide (6, 7) et une sortie de fluide (6, 7), où il est prévu, dans le carter (3), une bobine (8) produisant un champ alternatif magnétique, bobine qui, par un boîtier (9) de la bobine, est séparée du conduit de fluide de manière étanche, où il est prévu en outre au moins un élément chauffant de surface (18, 19, 20), métallique, qui peut être chauffé par le champ alternatif magnétique, où le conduit de fluide est subdivisé au moins en un premier conduit (14, 15) et en un deuxième conduit (16, 17), où les parois délimitant les conduits (14, 15, 16, 17) sont formées par le boîtier (9) de la bobine et / ou par un élément chauffant de surface (18, 19, 20), où au moins un élément chauffant de surface (18) est disposé à l'intérieur de la bobine (8) dans le sens radial, et au moins un élément chauffant de surface (19, 20) est disposé à l'extérieur de la bobine (8) dans le sens radial, et **caractérisé en ce que** l'élément chauffant de surface (18, 19, 20) au moins au nombre de un est disposé dans le conduit de fluide, où au moins un élément chauffant de surface (18, 19, 20) est introduit dans le premier conduit (14, 15) et dans le deuxième conduit (16, 17), où le premier conduit (14, 15) et le deuxième conduit (16, 17) sont subdivisés en deux conduits partiels (17a, 17b), par l'élément chauffant de surface (18, 19, 20).

2. Dispositif de chauffage (1) selon la revendication 1, **caractérisé en ce que** le conduit de fluide et / ou les conduits (14, 15, 16, 17) du conduit de fluide sont configurés en étant de forme annulaire, et le boîtier (9) de la bobine et / ou l'élément chauffant de surface (18, 19, 20) sont formés de manière cylindrique creuse et présentent des diamètres qui diffèrent l'un par rapport à l'autre, et sont emboîtés l'un dans l'autre.

3. Dispositif de chauffage (1) selon la revendication 2, **caractérisé en ce que** l'élément chauffant de surface (18, 19, 20) et / ou la bobine (8) et / ou le boîtier (9) de la bobine sont disposés de manière concentrique l'un par rapport à l'autre.

4. Dispositif de chauffage (1) selon l'une quelconque des revendications précédentes, **caractérisé en ce que** deux conduits (14, 15, 16, 17) contigus l'un à l'autre sont traversés par un fluide circulant dans le même sens ou en sens inverse.

5. Dispositif de chauffage (1) selon l'une quelconque des revendications précédentes, **caractérisé en ce qu'**au moins un élément chauffant de surface (18, 19, 20) est formé en étant composé d'un matériau magnétique.

6. Dispositif de chauffage (1) selon l'une quelconque des revendications précédentes, **caractérisé en ce que** l'élément chauffant de surface (18, 19, 20), qui subdivise le conduit (14, 15, 16, 17) en formant les deux conduits partiels, est baigné dans le flux circulant dans le même sens.

7. Dispositif de chauffage (1) selon l'une quelconque des revendications précédentes, **caractérisé en ce qu'**un élément chauffant de surface (18, 19, 20) est formé en étant composé d'un matériau qui présente une résistance électrique supérieure, par comparaison avec le matériau de la bobine (8).

8. Dispositif de chauffage (1) selon l'une quelconque des revendications précédentes, **caractérisé en ce qu'**au moins un élément chauffant de surface (18, 19, 20) présente au moins une ouverture à travers laquelle peut être réalisé un passage de fluide entre des conduits (14, 15, 16, 17, 17a, 17b) contigus les uns aux autres.

9. Dispositif de chauffage (1) selon l'une quelconque des revendications précédentes, **caractérisé en ce qu'**un élément (31) servant à la régulation du diamètre hydraulique du conduit (14, 15, 16, 17) peut être introduit au moins dans l'un des conduits (14, 15, 16, 17).

10. Dispositif de chauffage (1) selon l'une quelconque des revendications précédentes, **caractérisé en ce qu'**un capteur de température est disposé à l'intérieur et / ou à l'extérieur du boîtier (9) de la bobine.

11. Dispositif de chauffage (1) selon l'une quelconque des revendications précédentes, **caractérisé en ce que** la perte de pression dans des conduits (14, 15, 16, 17) contigus les uns aux autres est croissante ou décroissante, avec une longueur de trajet d'écoulement qui augmente à l'intérieur du dispositif de chauffage (1).

12. Dispositif de chauffage (1) selon l'une quelconque des revendications précédentes, **caractérisé en ce que** la perte de pression dans des conduits (14, 15, 16, 17) contigus les uns aux autres est croissante de façon constante, avec une longueur de trajet d'écoulement qui augmente à l'intérieur du dispositif de chauffage (1).

13. Dispositif de chauffage (1) selon l'une quelconque des revendications précédentes, **caractérisé en ce qu'**il est prévu un premier élément chauffant de surface (18), un deuxième élément chauffant de surface (19) et un troisième élément chauffant de surface (20), où le conduit de fluide traversant les éléments chauffants de surface (18, 19, 20) est subdivisé en un premier conduit (14), en un deuxième conduit (15), en un troisième conduit (16) et en un quatrième conduit (17), où l'un des conduits (17) est subdivisé en deux conduits partiels, par le troisième élément chauffant de surface (20).

14. Dispositif de chauffage (1) selon la revendication 13, **caractérisé en ce que** le premier élément chauffant de surface (18) est disposé à l'intérieur de la bobine (8) dans le sens radial, et le deuxième élément chauffant de surface (19) et le troisième élément chauffant de surface (20) sont disposés à l'extérieur de la bobine (8) dans le sens radial.
